# EUROPEAN PATENT APPLICATION

(11) **EP 4 748 683 A1**
(43) Date of publication of application: **27.05.2026**
(21) Application number: 24845505.7
(22) Date of filing: 17.07.2024
(51) Int. Cl.: B62D 1/19, B62D 1/181, B62D 1/185

(54) **STEERING DEVICE AND ENERGY ABSORPTION MECHANISM FOR STEERING DEVICE**

(30) Priority: 21.07.2023 JP 2023119055
(71) Applicant: JTEKT COLUMN SYSTEMS CORPORATION, Kosai-shi, Shizuoka 431-0431 (JP); JTEKT CORPORATION, Kariya-shi, Aichi 448-8652 (JP)
(72) Inventor: INOUE Kyoichi, Kosai-shi, Shizuoka 431-0431 (JP); MIYAGI Takeshi, Kosai-shi, Shizuoka 431-0431 (JP); URUMA Takeo, Kosai-shi, Shizuoka 431-0431 (JP); SUZUKI Tadashi, Kosai-shi, Shizuoka 431-0431 (JP); SUZUKI Haruyuki, Kosai-shi, Shizuoka 431-0431 (JP); SUZUKI Takuya, Kariya-shi, Aichi 448-8652 (JP); FUJISHIRO Daiki, Kariya-shi, Aichi 448-8652 (JP)
(74) Representative: Winter, Brandl - Partnerschaft mbB
(86) International application number: PCT/JP2024/025685
(87) International publication number: WO 2025/023126

(57) **Abstract**

A steering device (1) includes an inner tube (3), a drive unit (5), and an energy absorption part (7). The inner tube (3) is mounted to a column housing (9) to be movable to the column housing (9). The drive part (5) includes an output part (11) and a body (13) mounted to the column housing (9), and configured to drive the inner tube (3) by the output part (11). The energy absorption part (7) is formed as a unit, arranged between the inner tube (3) and the drive part (5), and configured to absorb an impact force applied to the inner tube (3).

## Description

### TECHNICAL FIELD

The present disclosure relates to a steering device and energy absorption mechanism for a steering device.

### BACKGROUND ART

PTL 1 describes a steering device having a structure in which an impact absorption member and a retainer are fastened to an inner tube by rivets.

### CITATION LIST

### PATENT LITERATURE

PTL 1: JP 2022-152635 A

### SUMMARY OF INVENTION

In the steering device of PTL 1, an impact absorption member and a retainer are fastened to an inner tube by rivets, and it is necessary to fasten a plurality of parts simultaneously, resulting in a complex assembly.

It is an object of the present disclosure to provide a steering device and an energy absorption mechanism of a steering device in which the energy absorption mechanism can be easily assembled to an inner tube, and a drive unit for moving the inner tube.

A steering device according to an embodiment includes an inner tube, a drive unit, and an energy absorption part. The inner tube is mounted to a column housing to be movable relative to the column housing. The drive unit includes an output part and a body mounted to the column housing, and is configured to drive the inner tube by the output part. The energy absorption part is formed as a unit, and arranged between the inner tube and the drive unit. The energy absorption part is configured to absorb an impact force applied to the inner tube by a first prescribed portion being fixed to the inner tube, and a second prescribed portion being fixed to the output part.

In the steering device according to the embodiment, the energy absorption part includes an inner tube side member, a drive unit side member, and an impact force absorbing material. A prescribed portion of the inner tube side member is the first prescribed portion. A prescribed portion of the drive unit side member is the second prescribed portion. A first portion of the impact force absorbing material engages with the inner tube side member, and a second portion of the impact force absorbing material engages with the drive unit side member. When an impact force is applied to the inner tube, the impact force absorbing material is configured to deform to absorb the impact force.

In the steering device according to the embodiment, the inner tube side member and the drive unit side member are joined by a shear pin. When an impact force with a predetermined magnitude is applied to the inner tube, the shear pin is configured to break before the impact force absorbing material deforms, and the impact force absorbing material is configured to deform after the shear pin breaks.

The steering device according to the embodiment includes a bracket formed in an L-shape including a first flat plate portion fixed to the output part, and a second flat plate portion fixed to the drive unit side member. The output part and the drive unit side member are joined using the bracket.

An energy absorption mechanism of a steering device according to an embodiment includes an inner tube side member, a drive unit side member, and an impact force absorbing material. The inner tube side member, the drive unit side member, and the impact force absorbing material are formed into a unit. The inner tube side member is mounted to an inner tube, and the drive unit side member is mounted to the output part. A first portion of the impact force absorbing material engages with the inner tube side member. A second portion of the impact force absorbing material engages with the drive unit side member. The impact force absorbing material is configured to deform to absorb an impact force applied to the inner tube. The inner tube movably engages with the column housing. The output part is an output part of a drive unit including a body mounted to the column housing, and the inner tube is driven by the output part.

According to an embodiment, a steering device and an energy absorption mechanism of a steering device can be provided that can be easily assembled to an energy absorption mechanism to an inner tube and a drive unit for moving the inner tube.

### BRIEF DESCRIPTION OF DRAWINGS

[FIG. 1] FIG. 1 is a perspective view of a steering device according to an embodiment.
[FIG. 2] FIG. 2 is an exploded perspective view of the steering device according to the embodiment.
[FIG. 3] FIG. 3 is a view illustrating an inner tube side member, a drive unit side member, and an impact force absorbing material constituting an energy absorption mechanism (energy absorption part) of the steering device according to the embodiment.
[FIG. 4] FIG. 4 is a view of FIG. 3 seen along an arrow IV.

### DESCRIPTION OF EMBODIMENTS

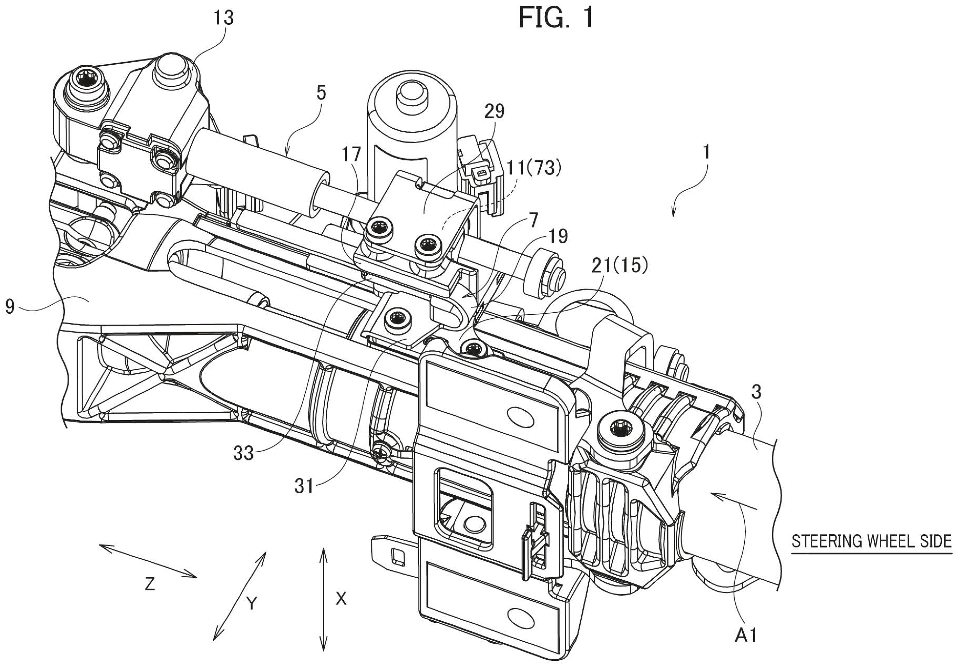

Hereinafter, a steering device 1 according to an embodiment will be described in detail with reference to the drawings. The steering device 1 according to the embodiment is, for example, installed and used in a vehicle. As illustrated in FIGS. 1 to 4, the steering device 1 includes an inner tube 3, an inner tube drive mechanism (drive unit) 5, and an energy absorption mechanism (energy absorption part) 7.

Here, for convenience of explanation, a predetermined direction is defined as an X direction, a predetermined direction orthogonal to the X direction is defined as a Y direction, and a direction orthogonal to the X direction and the Y direction is defined as a Z direction, with respect to the steering device.

The inner tube 3 is formed in a tubular shape (for example, cylindrical shape), and arranged in the column housing 9 to engage with the column housing 9 in a sliding manner. The inner tube 3 can move with respect to the column housing 9 in an extending direction (telescopic direction: Z direction) of a central axis of the inner tube 3 by sliding.

The column housing 9 is formed in a substantially tubular shape, and is located outside the inner tube 3. The inner tube 3 is arranged in the column housing 9 to penetrate the column housing 9.

An inner tube drive mechanism 5 includes a moving body (output part) 11, and a body 13 integrated with the column housing 9. The inner tube 3 is driven by the moving body 11 moving in the Z direction with respect to the body part 13.

The energy absorption mechanism 7 is formed as a unit in advance, and is arranged between the inner tube 3 and the moving body 11 of the inner tube drive mechanism 5. In the energy absorption mechanism 7, a first prescribed part 25 is fixed to the inner tube 3, and a second prescribed part 27 is fixed to the moving body 11 of the inner tube drive mechanism 5. Thus, the energy absorption mechanism 7 is configured to mitigate an impact force (see arrow A1 in FIG. 1) applied to the inner tube 3. That is, the energy absorption mechanism 7 is configured to absorb the energy of the impact force in the Z direction at the time of secondary collision to mitigate the impact force.

The energy absorption mechanism 7 is formed as a unit in advance. That is, the energy absorption mechanism 7 is assembled separately from the inner tube 3 and the inner tube drive mechanism 5.

The energy absorption mechanism 7 includes an inner tube side member 15, a drive unit side member (telescopic bracket) 17, and an impact force absorbing material (bending plate) 19, formed into a unit. The inner tube side member 15 includes, for example, a release plate 21 and an adjusting plate (telescopic plate) 23.

A predetermined portion of the inner tube side member 15 is a first predetermined portion 25 fixed to the inner tube 3. A predetermined portion of the drive unit side member 17 is a second predetermined portion 27 fixed to the moving body 11 of the inner tube drive mechanism 5 via a bracket 29, for example.

A first portion 31 of an impact force absorbing material 19 engages with the inner tube side member 15 (release plate 21), and a second portion 33 of the impact force absorbing material 19 engages with the drive unit side member 17. When an impact force is applied to the inner tube 3, the impact force absorbing material 19 deforms (for example, plastically deforms) to absorb the impact force.

As described above, the inner tube side member 15, the drive unit side member 17, and the impact force absorbing material 19 constituting the energy absorption mechanism 7 are formed into a unit in advance. That is, the energy absorption mechanism 7 is assembled separately from the inner tube 3, the inner tube drive mechanism 5, and other components. The energy absorption mechanism 7 is mounted to the inner tube 3 and the inner tube drive mechanism 5 in an assembled state and performs its functions.

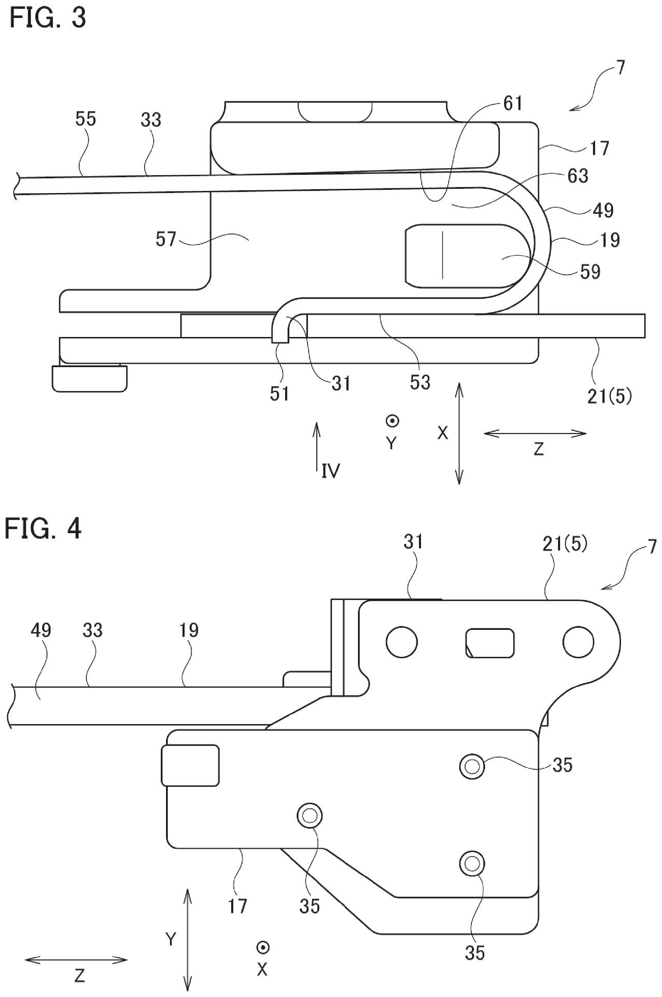

In the steering device 1, the inner tube side member 15 (release plate 21) and the drive unit side member 17 are joined (fastened) to each other by a plurality of (for example, three) shear pins 35 (see FIG. 4).

When an impact force with a predetermined magnitude is applied to the inner tube 3, the shear pins 35 break (shear fracture), and simultaneously, an impact force absorbing material 19 begins to deform (plastic deformation). Then, the connection between the inner tube side member 15 (release plate 21) and the drive unit side member 17 is released.

An energy value rises once when the shear pins 35 break, and then, the energy value rises above the energy value at the time of breaking due to plastic deformation of the impact force absorbing material 19. Then, the energy value becomes constant when the plastic deformation ends.

The steering device 1 is provided with a bracket 29. The moving body 11 and the drive unit side member 17 of the inner tube drive mechanism 5 are mutually connected by the bracket 29. The bracket 29 is provided with a first flat plate portion 37 and a second flat plate portion 39. The bracket 29 is formed in an L-shape when viewed in the Z direction.

The first flat plate portion 37 is fixed to the moving body 11 of the inner tube drive mechanism 5. The second flat portion 39 is fixed to the drive unit side member 17 (second predetermined portion 27) of the energy absorption mechanism 7.

Here, a state in which the inner tube drive mechanism 5 with the bracket 29 being arranged thereon is positioned and orientated to the energy absorption mechanism 7, as appropriate, is referred to as a state before arrangement of the bracket/drive unit. In the state before arrangement of the bracket/drive unit, the bracket 29 and the inner tube drive mechanism 5 move adequately (for example, move in parallel) with respect to the energy absorption mechanism 7. Thus, the bracket 29 engages with the energy absorption mechanism 7 (the drive unit side member 17), and is temporarily arranged.

In this temporarily installed state, the bracket 29 and the drive unit side member 17 are integrated by using a fastener such as bolts 41. As described above, arrangement of the inner tube drive mechanism 5 with respect to the energy absorption mechanism 7 can be facilitated by using the bracket 29 and a fastener such as the bolts 41. Further, the inner tube side member 15 can be easily arranged in the inner tube 3 by using a fastener such as bolts 43.

The steering apparatus 1 will now be described in more detail.

As described above, the inner tube side member 15 includes the release plate 21 and the adjustment plate 23. The release plate 21 and the adjustment plate 23 are formed, for example, in a flat plate shape.

A thickness direction of the release plate 21 and a thickness direction of the adjustment plate 23 coincide with each other, and are aligned with the X direction. The release plate 21 and the adjustment plate 23 overlap each other. The adjustment plate 23 is located between the inner tube 3 and the release plate 21 in the X direction.

A recess 45 is provided at the center of a surface of the adjusting plate 23 on the side of the inner tube 3. The recess 45 extends over the entire length of the adjusting plate 23 in the Z direction. Thus, two protrusions 47 extending over the entire length of the adjusting plate 23 in the Z direction are formed on the surface of the adjusting plate 23 on the side of the inner tube 3. The two protrusions 47 come into contact with a side surface of the cylindrical inner tube 3, so that the orientation of the inner tube side member 15 relative to the inner tube 3 is stabilized.

The release plate 21 includes engagement portions for engagement with the engagement portions of the drive unit side member 17. The release plate 21 and the drive unit side member 17 engage with each other at the engaging portions, so that the release plate 21 slides with respect to the drive unit side member 17 and can move in the Z direction when the shear pins 35 are broken. When the shear pins 35 are not broken, the release plate 21 and the drive unit side member 17 are integrated.

The release plate 21 and the adjustment plate 23 are fixed to the inner tube 3 by the bolts 43, as already understood.

The impact force absorbing material 19 includes an impact force absorbing material body 49 and a folded portion 51. The impact force absorbing material body 49 is formed in a flat plate shape before arrangement on the drive unit side member 17. The impact force absorbing material body 49 includes a wide portion 53 having a large dimension in the Y direction, and a narrow portion 55 having a small dimension in the Y direction. The folded portion 51 is formed by slightly extending the wide portion 53. The dimension of the folded portion 51 in the Y direction is equal to the dimension of the wide portion 53 in the Y direction.

As illustrated in FIG. 3, the drive unit side member 17 is provided with a planar guide surface 57, a projection 59 projecting from the guide surface 57, and an abutment surface 61.

A description will be given of a state in which the impact force absorbing material 19 is mounted to the drive unit side member 17 and the release plate 21 to form the energy absorption mechanism 7.

The impact force absorbing material 19 is fixed to the release plate 21 at the folded portion 51 and the wide portion 53, which form one portion of the impact force absorbing material 19 in the longitudinal direction. More specifically, the wide portion 53 of the impact force absorbing material 19 is fixed to the release plate 21 by one bolt 43 of the pair of bolts 43. The folded portion 51 of the impact force absorbing material 19 is fixed to the release plate 21 by fitting into a groove of the release plate 21.

The width direction of the impact force absorbing material 19 is aligned with the Y direction. When viewed in the Y direction, as illustrated in FIG. 3, an elongated narrow portion 55 of the impact force absorbing material 19 is bent in a semicircular arc shape at an intermediate portion in the longitudinal direction. The portion of the impact force absorbing material 19 other than the intermediate portion of the narrow portion 55 extends long in the Z direction, and the thickness direction is aligned with the X direction.

When viewed in the Y direction, as illustrated in FIG. 3, one side portion of the projecting portion 59 is rounded in a semicircular arc shape, and an intermediate portion of the narrow portion 55 is bent in an arc shape while abutting on the rounded portion of the projecting portion 59. The radius of the arc of the narrow portion 55 is larger than the radius of the arc of the projecting portion 59. A portion of the narrow portion 55 of the impact force absorbing member 19 extending from the arc shape portion on the side opposite to the wide portion 53 abuts on a planar abutting surface 61 of the drive unit side member 17.

One end of the impact force absorbing member 19 in the width direction abuts on a planar guide surface 57 of the drive unit side member 17. Further, as illustrated in FIG. 3, a gap 63 is formed between a portion of the narrow portion 55 of the impact force absorbing member 19 extending from the arc shape portion on a side opposite to the wide portion 53, and the projecting portion 59. That is, the projecting portion 59 and the portion extending from the arc shape portion on the side opposite to the wide portion 53 are separated from each other in the X direction.

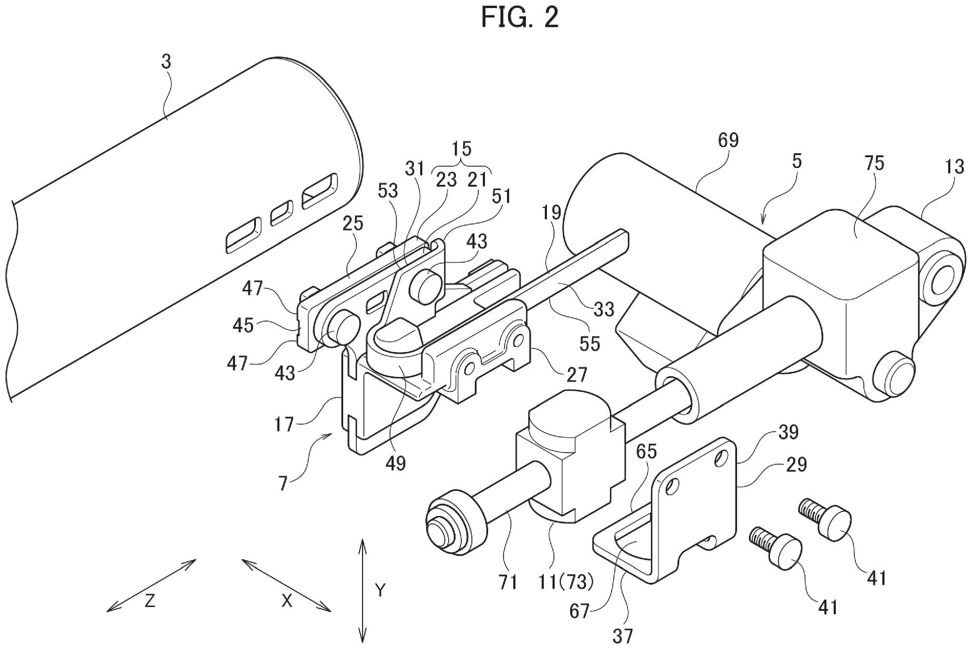

As illustrated in FIG. 2, a through hole 67 is formed in the first flat plate portion 37 of the bracket 29. A part of the moving body 11 is fitted into the through hole 67, whereby the bracket 29 is mounted to the moving body 11.

A portion 65 (see FIG. 2) of the bracket 29 may form a U-shaped notch in the through-hole 67 of the bracket 29. Then, the bracket 29 is separated from the inner tube drive mechanism 5, and the position and orientation of the bracket 29 with respect to the inner tube drive mechanism 5 are kept in an adequate state. Subsequently, the bracket 29 is moved in parallel to the inner tube drive mechanism 5, to which the bracket 29 may be temporarily mounted. In the temporarily mounted state, the bracket 29 is mounted to the drive unit side member 17 of the energy absorption mechanism 7 by using the bolts 41. Thus, the bracket 29 may be permanently mounted to the energy absorption mechanism 7 of the inner tube drive mechanism 5.

The rigidity and strength of the bracket 29, the inner tube side member 15, and the drive unit side member 17 are greater than the rigidity and strength of the shear pins 35 and the impact force absorbing material 19. Thus, when an impact force with a predetermined magnitude is applied to the inner tube 3, the bracket 29, the inner tube side member 15, and the drive unit side member 17 do not break, but only undergo slight elastic deformation.

Here, the rigidity of the bracket 29 may be reduced so that both the impact force absorbing material 19 and the bracket 29 plastically deform after an impact force with a predetermined magnitude is applied to the inner tube 3 and the shear pins 35 break. Even when the bracket 29 plastically deforms, the bracket 29 is kept fixed to the inner tube drive mechanism 5 and the energy absorption mechanism 7.

As illustrated in FIG. 2, the inner tube drive mechanism 5 includes a motor 69, a screw 71, and a nut 73 (moving body 11). The inner tube drive mechanism 5 further includes an L-shaped driving mechanism bracket 75 for supporting the screw 71 and the nut 73 (moving body 11). The driving mechanism bracket 75 is fastened to the column housing 9 via a fixing bolt (not illustrated). Thus, the body 13 of the inner tube drive mechanism 5 is fixed to the column housing 9.

Next, operation of the steering device 1 will be described. When an impact force with a predetermined magnitude is applied to the inner tube 3, all of the shear pins 35 break first. Subsequently, the impact force absorbing material 19 deforms to absorb the energy of the impact force.

The deformation of the impact force absorbing material 19 occurs when the folded part 51, the wide part 53, and the release plate 21 illustrated in FIG. 3 move to the left in FIG. 3 with respect to the drive unit side member 17. By the movement of the release plate 21 or the like, the arc-shaped part of the narrow part 55 of the impact force absorbing material 19 abutting on the protruding part 59 of the drive unit side member 17 moves. That is, the length of the part of the impact force absorbing material 19 extending in the Z direction on the lower side of the protruding part 59 increases, and the length of the part of the impact force absorbing material 19 extending in the Z direction on the upper side of the protruding part 59 decreases.

In the steering device 1, the energy absorption mechanism 7 that absorbs the impact force during secondary collision is formed as a unit, and can be easily arranged between the inner tube 3 and the moving body 11 of the inner tube drive mechanism 5. Thus, it is not necessary to fasten a plurality of parts simultaneously, so that the energy absorption mechanism 7 is easily mounted to the inner tube 3 and the inner tube drive mechanism 5.

When a predetermined energy absorbing load is desired to be produced by the steering device 1, that is, when an energy value of the impact force to be absorbed is desired to be adjusted, the energy absorption mechanism 7 that is formed as a unit only needs to be modified. Thus, the steering device 1 can be easily modified to have the predetermined energy absorbing load.

In the steering device 1, the energy absorption mechanism 7 includes the inner tube side member 15, the drive unit side member 17, and the impact force absorbing material 19. The energy absorption mechanism 7 is fixed to the inner tube 3 and the moving body 11. The impact force absorbing material 19 engages with the inner tube side member 15 and the drive unit side member 17. When an impact force is applied to the inner tube 3, the impact force absorbing material 19 deforms to absorb the impact force. Thus, the steering device 1 can absorb the impact force with a simple structure. Further, the steering device 1 can change the energy amount of the impact force which can be absorbed by changing specifications such as the shape of the impact force absorbing material 19.

In the steering device 1, the inner tube side member 15 and the drive unit side member 17 are joined by the shear pins 35. When an impact force with a predetermined magnitude is applied to the inner tube 3, the shear pins 35 break, and then the impact force absorbing material 19 deforms. Thus, the steering device 1 can control the load of energy absorption. That is, in the steering device 1, by changing the outer diameter, the number, the material, or the like, of the shear pins 35, as appropriate, the energy amount of the impact force which can be absorbed by breaking of the shear pins 35, or the like, can be changed.

In the steering device 1, the moving body 11 of the inner tube drive mechanism 5 and the drive unit side member 17 are joined by using the L-shaped bracket 29. Thus, the energy absorption mechanism 7, the inner tube drive mechanism 5, and the bracket 29 can be easily mounted to the inner tube 3, for example, from one direction.

Here, the energy absorption mechanism 7 of the steering device 1 will be described again.

The energy absorption mechanism 7 of the steering device 1 includes the inner tube side member 15, the drive unit side member 17, and the impact force absorbing material 19, formed into a unit. The inner tube side member 15 is mounted to the inner tube 3. The drive unit side member 17 is mounted to the output part 11. The first portion 31 of the impact force absorbing material 19 engages with the inner tube side member 15, and the second portion 33 of the impact force absorbing material 19 engages with the drive unit side member 17. The impact force absorbing material 19 deforms to absorb the impact force applied to the inner tube 3.

In the energy absorption mechanism 7 of the steering device 1, the inner tube 3 movably engages with the column housing 9. The output part 11 of the drive unit 5 includes the body 13 mounted to the column housing 9, and the inner tube 3 is driven by the output part 11.

The present embodiment has been described above. However, the present embodiment is not limited thereto, and various modifications are possible within the scope of the present embodiment.

The entire contents of Japanese Patent Application No. 2023-119055 (application date: July 21, 2023) are incorporated herein.

## Claims

1. A steering device, comprising:
an inner tube mounted to a column housing to be movable relative to the column housing;
a drive unit comprising an output part and a body mounted to the column housing, and configured to drive the inner tube by the output part; and
an energy absorption part, which is formed as a unit, arranged between the inner tube and the drive unit, and configured to absorb an impact force applied to the inner tube by a first prescribed portion being fixed to the inner tube, and a second prescribed portion being fixed to the output part.

2. The steering device according to claim 1, wherein
the energy absorption part comprises an inner tube side member, a drive unit side member, and an impact force absorbing material,
a prescribed portion of the inner tube side member is the first prescribed portion,
a prescribed portion of the drive unit side member is the second prescribed portion,
a first portion of the impact force absorbing material engages with the inner tube side member,
a second portion of the impact force absorbing material engages with the drive unit side member, and
when an impact force is applied to the inner tube, the impact force absorbing material is configured to deform to absorb the impact force.

3. The steering device according to claim 2, wherein
the inner tube side member and the drive unit side member are joined by a shear pin, and
when an impact force with a predetermined magnitude is applied to the inner tube, the shear pin is configured to break before the impact force absorbing material deforms, and the impact force absorbing material is configured to deform after the shear pin breaks.

4. The steering device according to claim 2 or 3, further comprising
a bracket formed in an L-shape comprising a first flat plate portion fixed to the output part, and a second flat plate portion fixed to the drive unit side member, wherein
the output part and the drive unit side member are joined using the bracket.

5. An energy absorption mechanism of a steering device, comprising:
an inner tube side member; a drive unit side member; and an impact force absorbing material, wherein
the inner tube side member, the drive unit side member, and the impact force absorbing material are formed into a unit,
the inner tube side member is mounted to an inner tube,
the drive unit side member is mounted to an output part,
a first portion of the impact force absorbing material engages with the inner tube side member,
a second portion of the impact force absorbing material engages with the drive unit side member,
the impact force absorbing material is configured to deform to absorb an impact force applied to the inner tube,
the inner tube movably engages with the column housing,
the output part is an output part of a drive unit including a body mounted to the column housing, and
the inner tube is driven by the output part.
